# EUROPÄISCHE PATENTANMELDUNG

(11) **EP 0 651 271 A2**
(43) Veröffentlichungstag der Anmeldung: **03.05.1995**
(21) Anmeldenummer: 94116792.6
(22) Anmeldetag: 25.10.1994
(51) Int. Cl.: G02B 6/38

(54) **Steckerstift und Kupplungsgehäuse für die zentrische Halterung von Lichtwellenleitern**

(30) Priorität: 27.10.1993 CH 32811/93
(71) Anmelder: HUBER & SUHNER AG, CH-9100 Herisau (CH)
(72) Erfinder: Heier, Andreas, CH-9424 Rheineck (CH)
(74) Vertreter: White, William

(57) **Zusammenfassung**

Es ist eine Aufgabe der Erfindung, einen Weg anzugeben, wodurch der Wunsch nach einem billigeren Steckerstift (12) für Lichtwellenleiter (3) erfüllbar ist. Dies wird mit Stecker (1) und Kupplungsgehäuse (2) für Lichtwellenleiterkabel (3) erreicht, bei denen der aus Steckerstift (12) und Steckergehäuse (11) bestehende Stecker (1) ebenso wie zumindest Teile der Hülse (22) des Kupplungsgehäuses (21) aus Keramik, wie z.B. Zirkonoxid oder Aluminiumoxid bestehen. Das Steckergehäuse (11) ist mit einem in ein axiales Passloch (14) des Steckerstiftes (12) eingreifenden Passzapfen (13) versehen.Das Steckergehäuse (11) und der Steckerstift (12) haben achsgenau aufeinander ausgerichtete Bohrungen (14b,16) für eine Lichtwellenleiterfaser (3). Dadurch, dass der Keramikteil des Steckerstiftes (12) um einen wesentlichen Teil seiner Länge verkürzt werden kann, ohne dass die mechanische Festigkeit benachteiligt würde, können die Kosten ganz erheblich gesenkt werden.

## Beschreibung

Die vorliegende Erfindung betrifft einen Stecker und ein Kupplungsgehäuse für die zentrische Halterung von Lichtwellenleitern, wobei der Stecker aus einem Steckerstift und einem Steckergehäuse besteht und der Steckerstift mit einem in ein axiales Passloch des Steckerstiftes eingreifenden Passzapfen versehen ist. und die Kupplung zur Aufnahme von zwei Steckern zur zentrisch genauen Übertragung von Lichtsignalen ausgebildet ist

Es ist in der Lichtwellenleitertechnik allgemein bekannt, dass der Steckerstift zusammen mit dem Teil des Steckergehäuses. der in die Bohrung des Kupplungsgehäuses eingreift aus Keramik, wie z.B. Zirkonoxid oder Aluminiumoxid gebildet ist, weil der Aussendurchmesser des Steckerstiftes üblichenweise 2,5 mm beträgt, und eine Toleranz von + 0 bis - 0.005 mm haben darf. Solche Genauigkeiten sind mit den angegebenen Materialien möglich. Diese Materialien sind aber sehr teuer und dadurch wird auch der gesamte Stecker sehr teuer. Wenn es möglich wäre, den Steckerstift so auszubilden, dass nur ein Teil davon aus diesen teuren Materialien bestehen müsste, könnte der Stecker sicher verbilligt werden.

Demgegenüber wurde in der EP-A-0072773 vorgeschlagen, auf den Steckerstift eine Nase mit gleichen Durchmesser wie der Passzapfen, aufzusetzen, die auswechselbar mit entsprechenden Bohrungen für Lichtwellenleiter mit unterschiedlichen Durchmessern sind. Während diese Nase nur für die Verwendung im Zusammenhang mit verschiedenen Durchmessern vorgesehen ist, Da jedoch deutlich gezeigt ist, dass der Aussendurchmesser des Steckerkörpers kleiner ist, als der Aussendurchmesser der Nase, muss diese die ganze Zentrierung und Führung des Steckers übernehmen. Wie dies aber mit den ersichtlichen Längenverhältnissen lösbar ist wird nicht angegeben.

Dementsprechend ist es eine Aufgabe der Erfindung, einen Weg anzugeben, wodurch der Wunsch nach einem billigeren Steckerstift für Lichwellentleiter erfüllbar und eine sichere und genaueste Zentrierung in der Kupplung erreichbar ist.

Erfindungsgemäss wird dies durch die Merkmale des kennzeichnenden Teils des unabhängigen Anspruchs 1 dadurch erreicht, dass der Steckerstift eine Mindestlänge hat, die zur alleinigen Halterung des Steckers im Kupplungsgehäuse genügt, in welchem Kupplungsgehäuse eine Hülse vorhanden ist, deren Länge wenigstens die zweifache Länge des Steckerstiftes hat und die mit Abstand von der Innenwand des Kupplungsgehäuses radial ungehaltert und damit lose im Hohlraum des Kupplungsgehäuses liegt und deren Innendurchmesser mit dem Passzapfen zusammen eine spielfreie Steckkupplung bildet, dass ferner der Steckerstift und die Hülse je aus Keramik, wie Zirkonoxid oder Aluminiumoxid, und dass wenigstens der Passzapfen sowie das Kupplungsgehäuse aus Kunststoff oder Metall bestehen.
kig verbunden ist. Dieser Passstift 13 ist genau auf den Durchmesser einer axialen Passbohrung 14b eines Steckerstiftes 12 abgestimmt.

Dieser Passstift 13 kann in in die Passbohrung 14b des Steckerstiftes 12 eingepresst, in diese geklebt, oder sowohl eingepresst, als auch geklebt sein. Eine weitere Möglichkeit bestünde darin, dass das Steckergehäuse 11 mit dem Haltestift 18 und mit dem Passstift 13 zusammen einstückig in die Bohrung 14 des Steckerstiftes 12 hinein spritzgeformt ist. Auch wäre es denkbar, dass nur Teile, wie der Passstift allein, oder mit ein Teil des Halterstiftes 18 einstückig ausgebildet und spritzgegossen ist, während der übrige Teil des Halterstiftes 18 mit dem Steckergehäuse 11 zusammen dann mit dem spritzgeformten Teil einstückig verbunden wird.

Erschwerend wirken sich hier die Dimensionen aus, wenn man bedenkt, dass der Aussendurchmesser des Steckerstiftes 12 nur 2,5 mm + 0, bis -0,005 mm beträgt, wobei der Durchmesser der Passbohrung 14 dann 1.55 + /- 0,05 betragen darf. Damit ist die Wandstärke des Steckerstiftes höchstens 0,5 mm dick. Der Passstift 13 muss deshalb auch sehr genau gearbeitet sein, um die Hülse des Steckerstiftes 12 nicht zu sprengen. Es hat sich überraschenderweise gezeigt, dass eine genügend gute Halterung zwischen Passstift 13 und Steckerstift 12 entsteht, wenn die Länge der Bohrung 14 wenigstens 2,5 mm lang ist. Damit kann der Steckerstift 12 auf 5 mm verkleinert werden, so dass gegenüber der früheren teuren Lösung eine Einsparung an Material, das heisst, Keramik, wie z.B. Zirkonoxid oder Aluminiumoxid, und dessen massgenaue Verarbeitung, von bis zu 60% erhalten wird. Da jedoch der Steckerstift für die Einführung in die Kupplung eine bis dreifach grössere Länge haben muss, kann der Passstift im Steckergehäuse 11 mittels des Halterstiftes 18 befestigt werden.

Selbstverständlich bleibt die Hülse 22 im Kupplungsteil 21 der Steckerkupplung 2 wie bisher bekannt, bestehen und ist üblicherweise auch aus einem der vorgenannten Materialien gefertigt. Damit ist weiterhin gewährleistet, dass sich weder der Stecker 1 noch die Kupplung abnützen können und dadurch eine ungenaue und undefinierbare Lage zueinander haben könnten, was dann zu Verlusten bezuglich der Übertragungsmöglichkeiten führen würde.

Es ist selbstverständlich wichtig, dass der Halterstift 18 und der Passstift 13 auch eine genaue gegenseitige axiale Lage haben. Dies kann auf einfache Weise erhalten werden, indem die Endfläche 17 des Steckerstiftes an eine Schulterfläche 13b des Halterstiftes 18 anstösst, denn dies kann problemlos überwacht werden.

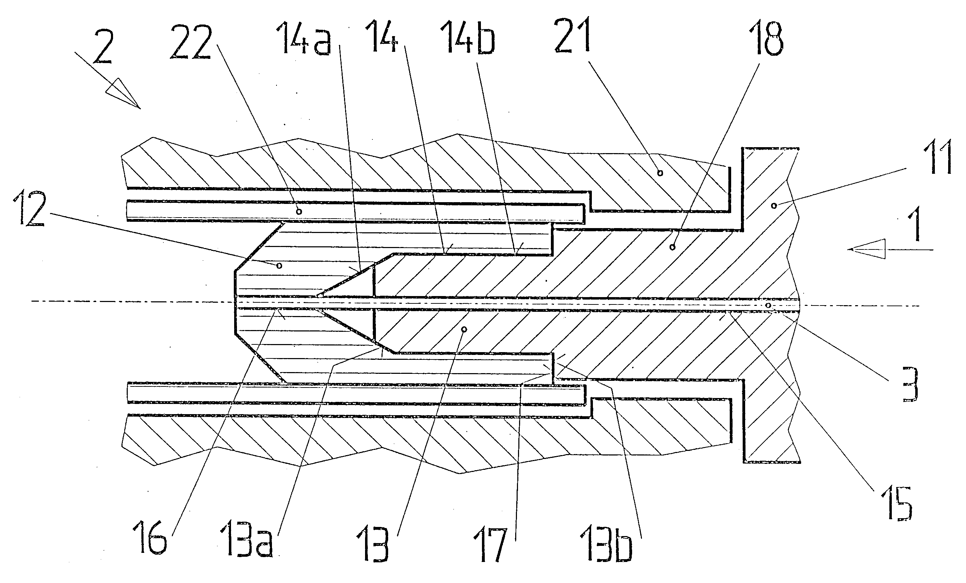

## Patentansprüche

1. Stecker und Kupplungsgehäuse für die zentrische Halterung von Lichtwellenleitern, wobei der Stecker (1) aus einem Steckerstift (12) und einem Steckergehäuse (11) besteht und der Steckerstift (12) mit einem in ein axiales Passloch (14) des Steckerstiftes (12) eingreifenden Passzapfen (13) versehen ist. und die Kupplung zur Aufnahme von zwei Steckern (1) zur zentrisch genauen Übertragung von Lichtsignalen ausgebildet ist, **dadurch gekennzeichnet**, dass der Steckerstift (12) eine Mindestlänge hat, die zur alleinigen Führung des Steckers im Kupplungsgehäuse (21) genügt, in welchem Kupplungsgehäuse (21) eine Hülse (22) vorhanden ist, deren Länge wenigstens die zweifache Länge des Steckerstiftes (12) hat , dass ferner der Steckerstift (12) und die Hülse je aus Keramik, wie Zirkonoxid oder Aluminiumoxid, und dass wenigstens der Passzapfen (13) sowie das Kupplungsgehäuse (21) aus Kunststoff oder Metall bestehen.

2. Stecker und Kupplungsgehäuse nach Anspruch 1, **dadurch gekennzeichnet**, dass die Hülse (22) mit Abstand von der Innenwand des Kupplungsgehäuses (21) radial ungehaltert und damit lose im Hohlraum des Kupplungsgehäuses (21) liegt und deren Innendurchmesser mit dem Steckerstift (12) zusammen eine spielfreie Steckkupplung bildet.

3. Stecker und Kupplungsgehäuse nach Anspruch 1 oder 2, **dadurch gekennzeichnet**, dass der Passzapfen (13) in das Passloch (14) eingepresst ist.

4. Stecker und Kupplungsgehäuse nach Anspruch 1 oder 2, **dadurch gekennzeichnet,** dass der Passzapfen (13) in das Passloch (14) eingeklebt ist.

5. Stecker und Kupplungsgehäuse nach Anspruch 1 oder 2, **dadurch gekennzeichnet,** dass vom Steckergehäuse (1) wenigstens der Passzapfen (13) in das Passloch (14) spritzgegossen ist, und das Steckergehäuse (11) am Passzapfen (13) einstückig befesteigt ist.

6. Stecker und Kupplungsgehäuse nach Anspruch 5, **dadurch gekennzeichnet,** dass das gesamte Steckergehäuse (11) einstückig mit dem Passzapfen (13) im Passloch (14) spritzgegossen ist.
